# FASCICULE DE BREVET EUROPEEN

(11) **EP 3 535 836 B1**
(45) Date de publication et mention de la délivrance du brevet: **17.03.2021**
(21) Numéro de dépôt: 17804463.2
(22) Date de dépôt: 03.11.2017
(51) Int. Cl.: H02K 15/02, H01F 3/02, H01F 41/02, B32B 38/04, B21D 28/06, C09J 5/00

(54) **PAQUET DE TOLES FIXEES ENTRE ELLES PAR ADHERENCE, PROCEDE ET INSTALLATION DE FABRICATION D'UN TEL PAQUET DE TOLES**
LAMINIERUNGSSTAPEL, IN DEM DIE LAMINIERUNGEN DURCH HAFTUNG MITEINANDER VERBUNDEN SIND, VERFAHREN UND VORRICHTUNG ZUR HERSTELLUNG SOLCH EINES LAMINIERUNGSSTAPELS
LAMINATION STACK IN WHICH THE LAMINATIONS ARE ATTACHED TO ONE ANOTHER BY ADHESION, METHOD AND EQUIPMENT FOR THE PRODUCTION OF SUCH A LAMINATION STACK

(30) Priorité: 03.11.2016 FR 1660649
(43) Date de publication de la demande: 11.09.2019
(73) Titulaire: R. Bourgeois, 25000 Besançon (FR)
(72) Inventeur: BOURGEOIS, Raymond Nicolas, 25870 Les Auxons (FR); BOURGEOIS, Olivier, 25000 Besançon (FR)
(74) Mandataire: Lavialle, Bruno François Stéphane
(86) Numéro de dépôt international: PCT/EP2017/078238
(87) Numéro de publication internationale: WO 2018/083267

(56) Documents cités:
- DE-A1- 2 151 960
- DE-A1- 3 535 573
- DE-A1-102012 001 744
- JP-A- H05 304 037
- JP-A- 2006 334 648

## Description

La présente invention concerne la fabrication de paquets de tôles pour constituer des armatures feuilletées de machines électromagnétiques.

### ETAT DE LA TECHNIQUE

Un paquet de tôles est un ensemble de tôles qui sont fixées à plat les unes contre les autres. De tels paquets de tôles sont utilisés pour former des armatures conductrices de flux magnétique et par exemple des stators et des rotors de machines électriques.

Ces paquets de tôles sont fabriqués dans des installations comprenant une succession d'outils (couple matrice et poinçon) dans lesquels est déplacée une bande de métal, généralement un acier au silicium. Le dernier outil de découpe, dit outil de détourage, assure la séparation des tôles de la bande. Les tôles sont empilées les unes sur les autres en sortie de l'outil de détourage, soit directement dans l'outil de détourage au fur et à mesure de leur découpage, soit dans un poste séparé.

Il existe de nombreux modes de fixation des tôles entre elles.

Certains paquets de tôles sont ainsi réalisés par soudage ou rivetage des tôles. Ces opérations de fixation demandent toutefois des équipements difficiles à intégrer dans les installations de fabrication de paquets de tôles.

Il est par ailleurs connu de fixer les tôles les unes aux autres au moyen d'agrafes mâles et femelles découpées dans chaque tôle et engagées les unes dans les autres (assemblage par « interlocking »). L'installation comprend alors au moins un outil dont la matrice et le poinçon correspondant ont une forme adaptée pour former les moyens d'agrafage. L'opération d'agrafage est réalisée dans l'outil de détourage plaquant la dernière tôle découpée par rapport au paquet de tôles en cours de formation de manière à engager les agrafes de la tôle dernièrement découpée dans les ouvertures de la dernière tôle du paquet de tôles, ou l'inverse. L'installation d'emboutissage est donc relativement complexe.

Pour simplifier la fabrication des paquets de tôles, il a été envisagé de fixer les tôles les unes aux autres au moyen de points de colle. La colle doit être déposée au cœur même de l'outil, juste avant les éléments de détourage des tôles, ce qui s'avère très délicat compte tenu des contraintes d'utilisation des produits adhésifs en général. Le document JP H05304037 A décrit un procédé de fabrication de paquets de tôles selon lequel chaque face de la tôle est recouverte d'un composant d'une colle liquide bi-composant de telle manière que l'activation du collage s'effectue par la mise en contact des tôles lors de l'empilement.

Il est aussi connu de l'art antérieur le fait de découper des tôles couvertes d'un vernis thermoréactivable et ensuite chauffer un paquet de telles tôles dans un four sur un posage pour obtenir le collage tôle à tôle. Le chauffage de la colle provoque nécessairement un échauffement de la bande qui complique finalement la fabrication des paquets de tôles. En effet, l'échauffement de la bande cause une dilatation de celle-ci qui est une cause d'imprécision dimensionnelle.

### OBJET DE L'INVENTION

Un but de l'invention est de simplifier la fixation des tôles d'un paquet de tôles entre elles.

### BREF EXPOSE DE L'INVENTION

A cet effet, on prévoit, selon l'invention, un procédé de fabrication d'un paquet de tôles pour machine électromagnétique, comprenant les étapes de :
- faire défiler une bande métallique entre une matrice et un poinçon,
- découper par poinçonnage des tôles dans la bande et les accumuler pour former un paquet de tôles ;
- recouvrir, au moins une surface de zones de la bande destinées à devenir des tôles, par une colle ayant un pouvoir adhésif pour adhérer à la bande,
le procédé étant caractérisé en ce qu'il comprend les étapes suivantes:
- faire sécher la colle pour désactiver son pouvoir adhésif,
- mettre localement en contact un solvant avec la colle pour réactiver le pouvoir adhésif de la colle de la tôle dernièrement accumulée ou de la tôle à accumuler après découpage de telle manière que la tôle à accumuler après découpage soit collée au paquet de tôles en cours de fabrication.

Avec le procédé de l'invention, les tôles sont fixées les unes aux autres par adhérence. La colle peut être déposée sur la bande avant l'introduction de la bande dans l'outil de poinçonnage, voire plusieurs heures ou jours avant l'opération de poinçonnage, ce qui est beaucoup plus simple. La mise en contact de la colle avec le solvant peut être réalisée par pulvérisation directe sur la colle ou par application de la bande sur une couche de matériau imprégnée du solvant, ce qui est particulièrement simple à réaliser au sein de l'outil de poinçonnage.

L'invention concerne également une installation pour la mise en œuvre de ce procédé. Cette installation comprend une matrice, un poinçon et un dispositif de déplacement d'une bande entre la matrice et le poinçon, la matrice et le poinçon comportant des éléments de détourage de formes complémentaire pour découper des tôles dans la bande. L'installation comprend : un dispositif de dépôt sur au moins une surface de la bande d'une colle ayant un pouvoir adhésif pour adhérer à la bande ; et, en amont des éléments de détourage par référence au sens de déplacement de la bande, un dispositif de dépôt sur la colle d'un solvant pour réactiver le pouvoir adhésif de la colle.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en perspective, avec une coupe transversale, d'un paquet de tôles conforme à l'invention ;
- la figure 2 est une vue en perspective d'une face inférieure de la bande partiellement poinçonnée ;
- la figure 3 est une vue en perspective d'une face supérieure de la bande partiellement poinçonnée ;
- la figure 4 est une vue schématique en perspective, avec écorché, d'une installation de fabrication selon l'invention ;
- la figure 5 est une vue schématique en perspective de la matrice de l'installation de fabrication.

### DESCRIPTION DETAILLEE DE L'INVENTION

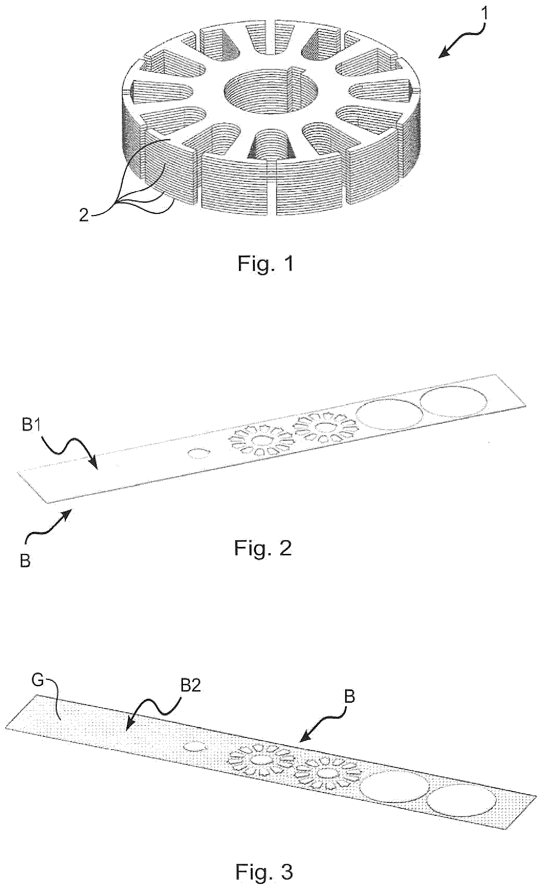

En référence à la figure 1, l'invention concerne un paquet de tôles, généralement désigné en 1, qui est destiné à former une armature de conduction des flux magnétiques dans une machine électromagnétique. Ladite armature est par exemple un stator ou un rotor.

Le paquet de tôles 1 comprend des tôles 2 fixées deux à deux par une colle disposée entre les tôles de chaque paire de tôles 2 adjacentes l'une à l'autre.

Les tôles 2 ont ici une forme annulaire avec des rayons périphériques, étant entendu que l'invention s'applique à des tôles de toute forme.

La colle est une colle en phase solvant et plus particulièrement ici une colle formée par mélange d'un élastomère avec une résine phénolique. L'élastomère est ici un butadiène acrylonitrile pour former une colle nitrile phénolique. La colle peut comprendre des ajouts visant à améliorer ses performances et par exemple du TDI-NOP (de l'anglais « toluene diisocyanate nitrosophenol »). La caractéristique principale de la colle est que son pouvoir adhésif est réactivable, c'est-à-dire qu'après séchage, le solvant contenu dans la colle s'est évaporé de sorte que la partie de la colle qui est à l'air libre a perdu son pouvoir adhésif qui peut être réactivé en mettant cette partie de la colle en contact avec un solvant. Bien entendu, toute colle ayant un pouvoir adhésif avec le métal utilisé pour fabriquer les tôles est utilisable pour la mise en œuvre du procédé de l'invention.

Les tôles 2 résultent du découpage d'une bande métallique B ayant une surface inférieure B1 et une surface supérieure B2.

Le procédé de fabrication du paquet de tôles 1 à partir de la bande B comprend les étapes de :
- recouvrir, au moins une surface de zones de la bande B (ici la surface supérieure B2) qui sont destinées à devenir des tôles, par une couche de colle G ayant un pouvoir adhésif pour adhérer à la bande B ;
- faire sécher la colle G pour désactiver son pouvoir adhésif (c'est-à-dire pendant un temps suffisant pour faire évaporer le solvant contenu dans la colle G) ;
- faire défiler la bande B entre une matrice et un poinçon d'un outil de découpe ;
- déposer un solvant sur la surface inférieure B1 dans chaque zone de la bande B destinée à devenir une tôle 2 avant le découpage de la tôle 2 correspondante, le solvant ayant pour fonction de réactiver le pouvoir adhésif de la colle qui se trouve sur la tôle supérieure du paquet de tôles en cours de fabrication lorsque la tôle dernièrement découpée est appliquée contre ladite tôle supérieure ;
- découper par poinçonnage la tôle 2 dans la bande B de telle manière qu'elle soit collée au paquet de tôles.

Le solvant utilisé comprend ici de la cétone et est plus précisément de l'acétone mais d'autres solvants sont utilisables comme le méthyl-éthyle-cétone ou un hydrocarbure aromatique tel que le toluène. On notera qu'en déposant le solvant sur la surface de la bande dépourvue de colle, la réactivation se produit quand la surface inférieure B1 de la tôle dernièrement découpée est en contact avec la colle recouvrant la surface supérieure B2 de la tôle supérieure du paquet de tôles en cours de fabrication au poste détourage. De cette façon, la colle réactivée n'est jamais en contact ni avec les poinçons, ni avec les matrices.

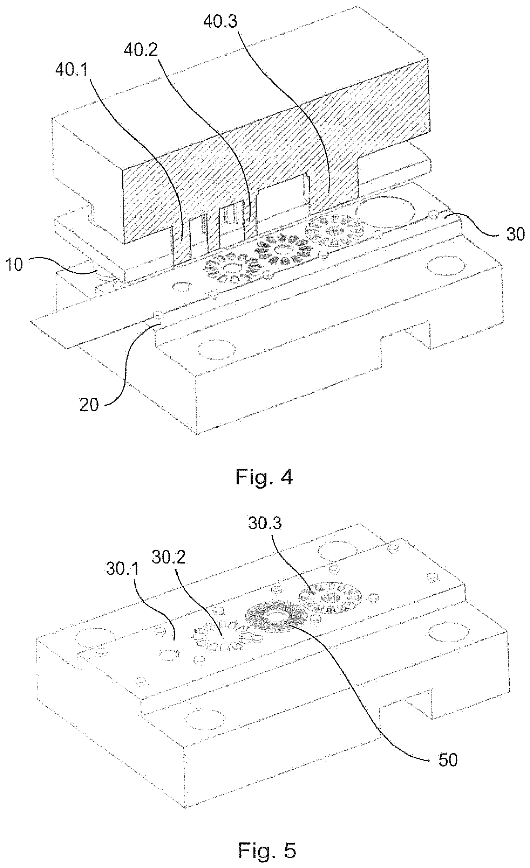

Ce procédé est mis en œuvre au moyen d'une installation de fabrication de paquets de tôles par poinçonnage telle que celle représentée aux figures 4 et 5.

L'installation comprend un bâti 10 avec une table 20, et une succession d'outils de découpe à savoir une matrice 30.1 et un poinçon 40.1 pour former l'orifice central (couramment nommé alésage) de la tôle, une matrice 30.2 et un poinçon 40.2 pour former les rayons périphériques de la tôle par découpe d'encoches, une matrice 30.3 et un poinçon 40.3 pour détourer la tôle. Les poinçons sont généralement solidaires de la partie mobile d'une presse.

L'installation comprend en outre un dispositif, non représenté, de déplacement (ou « amenage ») par pas d'une bande B sur la table 20 de manière que la bande B passe dans les outils de découpe, entre les matrices et les poinçons. Le dispositif de déplacement par pas 50 est agencé pour séquentiellement décoller la bande B de la table 20, faire avancer la bande B d'un pas puis reposer la bande B sur la table 20 de sorte que la bande B repose sur la table 20 lorsque la bande B est immobile et ne frotte pas sur la table 20 lors de l'avancement de la bande B. Les poinçons et le dispositif de déplacement sont associés à des actionneurs reliés à une unité de commande pilotant les actionneurs de manière à synchroniser l'avancement de la bande avec le déplacement des poinçons vers les matrices. Ces différents éléments sont connus en eux-mêmes et ne seront pas plus détaillés ici.

La matrice 30.3 et le poinçon 40.3 sont agencés pour former un outil de détourage et sont montés dans le bâti 10 pour permettre le découpage des tôles 2 dans la bande B en accumulant les unes au-dessus des autres les tôles 2 découpées, de manière à former le paquet de tôles 1 au fur et à mesure du découpage des tôles 2.

L'installation comprend également, en amont de la matrice 30.3 et du poinçon 40.3 par référence au sens de défilement de la bande B, un dispositif 50 de dépôt, sur la surface inférieure B1 de la bande B, d'un solvant. Le dispositif 50 comprend ici un tampon imprégné de solvant. Le tampon est en textile et de forme circulaire de diamètre sensiblement égal au diamètre extérieur d'une tôle. Le dispositif 50 comprend aussi un conduit d'amenée du solvant au tampon textile pour périodiquement imbiber le tampon. Le conduit d'amenée du solvant s'étend dans la table 20 entre le tampon et un réservoir de solvant non représenté.

On comprend que le tampon s'étend juste sous la bande B lorsque celle-ci est entre les matrices 30.2 et 30.3 et les poinçons 40.2 et 40.3 de sorte qu'une portion de la bande B soit en contact avec la face supérieure du tampon lorsque la bande B est immobile et la bande B ne soit plus en contact avec la face supérieure du tampon lorsque la bande B est en déplacement.

Lorsque la bande B est reposée sur la table 20, une portion de la bande B correspondant à l'emplacement de tôle est appliquée contre le tampon. Lorsque la bande B est décollée pour procéder à son avancement, ladite zone humectée se trouve alors en regard de la dernière tôle du paquet de tôles en cours de formation de telle manière que, lorsque le poinçon 40.3 et la matrice 30.3 vont être rapprochés pour découper la tôle 2 de la bande B, ladite tôle 2 va être appliquée contre le paquet de tôles 1, la face supérieure adhésivée de la tôle supérieure du paquet de tôles en cours de formation rencontre la face inférieure humectée de solvant de la tôle qui vient d'être découpée. Très rapidement (c'est-à-dire au plus tard quand le paquet de tôles terminé est évacué de l'installation), le solvant se sera suffisamment évaporé de la colle pour assurer la fixation de la tôle 2 dernièrement découpée au paquet de tôles 1.

Le tampon est ici monté dans la table pour être mobile entre une position inactive dans laquelle le tampon n'est pas en contact avec la bande B reposant sur la table et une position active dans laquelle le tampon est en contact avec la bande B reposant sur la table. Le tampon est déplacé entre ses deux positions par un actionneur relié à l'unité de commande. Ainsi, pour former des paquets d'un nombre n de tôles, on escamotera le tampon tous les n déplacements de la bande B d'un pas de telle manière que la colle ne soit pas réactivée sur la tôle supérieure d'un paquet de n tôles. Ainsi, lorsque le procédé est mis en œuvre pour former en série des paquets d'un nombre prédéterminé de tôles, le dépôt de solvant dans chaque zone de la bande destinée à devenir une tôle est omis après le poinçonnage du nombre prédéterminé de tôles.

Bien entendu, l'invention n'est pas limitée aux modes de réalisation décrits mais englobe toute variante entrant dans le champ de l'invention telle que définie par les revendications.

En particulier, l'installation peut avoir une structure différente de celle décrite.

Le tampon peut être remplacé par une buse pulvérisant le solvant directement sur la portion de la surface inférieure de la bande B se trouvant en face de la buse.

On pourrait aussi pulvériser de la colle après le découpage pendant la remontée du coulisseau au niveau du poinçon détourage.

En variante, le solvant peut être déposé directement sur la colle dans la zone de la bande destinée à former la tôle à découper. De préférence alors, la colle et le solvant sont appliqués sur la surface de la bande opposée à celle sur laquelle le poinçon de détourage prend appui.

En variante, le dispositif d'avancement de la bande peut être mécaniquement synchronisé avec le mécanisme de descente de la presse portant les poinçons, et le déplacement du tampon entre ses deux positions peut être synchronisé avec le dispositif d'avancement.

La surface de la bande peut être recouverte sensiblement en totalité par la colle.

Le solvant peut être mis en contact avec la colle immédiatement après la découpe de la tôle.

## Revendications

1. Procédé de fabrication d'un paquet de tôles pour machine électromagnétique, comprenant les étapes de :
- faire défiler une bande métallique entre une matrice et un poinçon,
- découper par poinçonnage des tôles dans la bande et les accumuler pour former un paquet de tôles ;
- recouvrir, au moins une surface de zones de la bande destinées à devenir des tôles, par une colle ayant un pouvoir adhésif pour adhérer à la bande,
le procédé étant **caractérisé en ce qu'**il comprend les étapes suivantes :
- faire sécher la colle pour désactiver son pouvoir adhésif,
- mettre localement en contact un solvant avec la colle pour réactiver le pouvoir adhésif de la colle de la tôle dernièrement accumulée ou de la tôle à accumuler après découpage de telle manière que la tôle à accumuler après découpage soit collée au paquet de tôles en cours de fabrication.

2. Procédé selon la revendication 1, dans lequel la colle est formée par mélange d'un élastomère avec une résine phénolique.

3. Procédé selon la revendication 2, dans lequel la colle est une colle nitrile phénolique.

4. Procédé selon l'une quelconque des revendications précédentes, mis en œuvre pour former en série des paquets d'un nombre prédéterminé de tôles, dans lequel le dépôt de solvant dans chaque zone de la bande destinée à devenir une tôle est omis après le poinçonnage du nombre prédéterminé de tôles.

5. Procédé selon l'une quelconque des revendications précédentes, dans lequel la surface de la bande est recouverte sensiblement en totalité par la colle.

6. Procédé selon l'une quelconque des revendications précédentes, dans lequel le solvant comprend une cétone.

7. Procédé selon l'une quelconque des revendications précédentes, dans lequel le solvant est mis en contact avec la colle immédiatement après la découpe de la tôle.

8. Procédé selon la revendication 7, dans lequel la colle est déposée sur une surface de la bande et le solvant est déposé sur la surface opposée de telle manière que le solvant est mis en contact avec la colle lorsque la tôle dernièrement découpée est appliquée contre la tôle dernièrement accumulée du paquet de tôle en cours de fabrication.

9. Installation de fabrication de paquets de tôles par poinçonnage, comprenant une matrice, un poinçon et un dispositif de déplacement d'une bande entre la matrice et le poinçon, la matrice et le poinçon comportant des éléments de détourage de formes complémentaire pour découper des tôles dans la bande, l'installation comprenant aussi un dispositif de dépôt sur au moins une surface de la bande d'une colle ayant un pouvoir adhésif pour adhérer à la bande ; et **caractérisé en ce que** l'installation comprend, en amont des éléments de détourage par référence au sens de déplacement de la bande, un dispositif de dépôt sur la colle d'un solvant pour réactiver le pouvoir adhésif de la colle.

10. Installation selon la revendication 9, dans laquelle le dispositif de dépôt de solvant comprend un tampon mobile entre une position inactive dans laquelle le tampon n'est pas en contact avec la bande reposant sur la matrice et une position active dans laquelle le tampon est en contact avec la bande reposant sur la matrice.

## Patentansprüche

1. Verfahren zum Herstellen eines Blechpakets für eine elektromagnetische Maschine, umfassend die Schritte:
- Ablaufen lassen eines Metallbandes zwischen einer Matrize und einem Stempel,
- Ausschneiden von Blechen mittels Stanzen aus dem Band und Sammeln derselben, um ein Blechpaket zu bilden;
- Überziehen mindestens einer Oberfläche von Bereichen des Bandes, die dazu bestimmt sind, Bleche zu werden, mit einem Klebstoff, der ein Haftvermögen hat, um an dem Band zu haften,
wobei das Verfahren **dadurch gekennzeichnet ist, dass** es die folgenden Schritte umfasst:
- Trocknen lassen des Klebstoffs, um sein Haftvermögen zu desaktivieren,
- lokales In-Kontakt-Bringen eines Lösungsmittels mit dem Klebstoff, um das Haftvermögen des Klebstoffs des zuletzt gesammelten Blechs oder des nach dem Ausschneiden zu sammelnden Blechs derart zu reaktivieren, dass das nach dem Ausschneiden zu sammelnde Blech während der Herstellung auf das Blechpaket geklebt wird.

2. Verfahren nach Anspruch 1, bei dem der Klebstoff aus einer Mischung aus einem Elastomer mit einem Phenolharz gebildet wird.

3. Verfahren nach Anspruch 2, bei dem der Klebstoff ein Phenol-Nitril-Klebstoff ist.

4. Verfahren nach einem der vorhergehenden Ansprüche, das zum Bilden einer Reihe von Paketen mit einer vorbestimmten Anzahl von Blechen eingesetzt wird, wobei das Auftragen von Lösungsmittel in jedem Bereich des Bandes, der dazu bestimmt ist, ein Blech zu werden, nach dem Stanzen der vorbestimmten Anzahl von Blechen entfällt.

5. Verfahren nach einem der vorhergehenden Ansprüche, bei dem die Oberfläche des Bandes im Wesentlichen vollständig mit dem Klebstoff überzogen wird.

6. Verfahren nach einem der vorhergehenden Ansprüche, bei dem das Lösungsmittel Ketone umfasst.

7. Verfahren nach einem der vorhergehenden Ansprüche, bei dem das Lösungsmittel unmittelbar nach dem Ausschneiden des Blechs mit dem Klebstoff in Kontakt gebracht wird.

8. Verfahren nach Anspruch 7, bei dem der Klebstoff auf eine Oberfläche des Bandes aufgetragen wird und das Lösungsmittel auf der abgewandten Oberfläche derart aufgetragen wird, dass das Lösungsmittel mit dem Klebstoff in Kontakt gebracht wird, wenn das zuletzt geschnittene Blech auf das zuletzt gesammelte Blech des Blechpakets während der Herstellung aufgebracht wird.

9. Anlage zum Herstellen von Blechpaketen durch Stanzen, umfassend eine Matrize, einen Stempel und eine Verschiebungsvorrichtung zum Verschieben eines Bandes zwischen der Matrize und dem Stempel, wobei die Matrize und der Stempel komplementäre Formbeschneidungselemente umfassen, um Bleche aus dem Band auszuschneiden, wobei die Anlage ferner eine Vorrichtung zum Auftragen eines Klebstoffs mit einem Haftvermögen zum Haften auf dem Band auf mindestens eine Oberfläche des Bandes umfasst, und **dadurch gekennzeichnet, dass** die Anlage stromaufwärts der Beschneidungselemente in Bezug auf die Verschiebungsrichtung des Bandes eine Vorrichtung zum Auftragen eines Lösungsmittels auf den Klebstoff umfasst, um das Haftvermögen des Klebstoffs zu reaktivieren.

10. Anlage nach Anspruch 9, bei der die Vorrichtung zum Lösungsmittelauftrag ein Kissen umfasst, das zwischen einer inaktiven Position, in der das Kissen nicht mit dem auf der Matrize aufliegenden Band in Kontakt ist, und einer aktiven Position beweglich ist, in der das Kissen mit dem auf der Matrize aufliegenden Band in Kontakt ist.

## Claims

1. A method for the production of a lamination stack for an electromagnetic machine, including the steps of:
- causing a metal strip to be fed between a punch and a die,
- cutting out laminations from the strip by punching and accumulating them to form a lamination stack;
the method being **characterized in that** it includes the following steps:
- covering at least one surface of areas of the strip intended to become laminations with a glue having an adhesive power to adhere to the strip,
- drying the glue to deactivate its adhesive power,
- locally bringing a solvent into contact with the glue to reactivate the adhesive power of the glue of the last lamination to have been accumulated or of the lamination to be accumulated after cutting so that the lamination to be accumulated after cutting is stuck to the lamination stack being produced.

2. The method as claimed in claim 1, in which the glue is formed by mixing an elastomer with a phenolic resin.

3. The method as claimed in claim 2, in which the glue is a nitrile phenolic glue.

4. The method as claimed in any one of the preceding claims, executed to form a series of stacks comprising a predetermined number of laminations, in which the deposition of solvent in each area of the strip intended to become a lamination is omitted after punching the predetermined number of laminations.

5. The method as claimed in any one of the preceding claims, in which the surface of the strip is covered substantially entirely with the glue.

6. The method as claimed in any one of the preceding claims, in which the solvent includes a ketone.

7. The method as claimed in any one of the preceding claims, in which the solvent is brought into contact with the glue immediately after cutting out the lamination.

8. The method as claimed in claim 7, in which the glue is deposited on a surface of the strip and the solvent is deposited on the opposite surface so that the solvent is brought into contact with the glue when the last lamination to have been cut is pressed against the last lamination to have been accumulated of the lamination stack being produced.

9. An installation for production of lamination stacks by punching, including a die, a punch and a device for moving a strip between the die and the punch, the die and the punch including complementarily shaped trimming elements for cutting out the laminations from the strip, the installation also including a device for depositing onto at least one surface of the strip a glue having an adhesive power to adhere to the strip and **characterized in that** the installation comprises, upstream of the trimming elements with respect to the direction of movement of the strip, a device for depositing a solvent onto the glue to reactivate the adhesive power of the glue.

10. The installation as claimed in claim 9, in which the solvent deposition device includes a pad mobile between an inactive position in which the pad is not in contact with the strip resting on the die and an active position in which the pad is in contact with the strip resting on the die.
